# EUROPÄISCHE PATENTSCHRIFT

(11) **EP 0 418 652 B1**
(45) Veröffentlichungstag und Bekanntmachung des Hinweises auf die Patenterteilung: **12.05.1993**
(21) Anmeldenummer: 90117082.9
(22) Anmeldetag: 05.09.1990
(51) Int. Cl.: C02F 3/20

(54) **Belüftungsvorrichtung**
Aerating device
Dispositif d'aération

(30) Priorität: 22.09.1989 DE 3931676
(43) Veröffentlichungstag der Anmeldung: 27.03.1991
(73) Patentinhaber: IBO W. GRIMMEL, ABWASSERTECHNIK GMBH & CO. KG., D-61239 Ober-Mörlen (DE)
(72) Erfinder: Grimmel, Walter, W-6352 Ober-Mörlen (DE)
(74) Vertreter: Schlagwein, Udo, Dipl.-Ing.

(56) Entgegenhaltungen:
- DE-A- 3 316 140
- DE-A- 3 441 342
- FR-A- 2 305 401

## Beschreibung

Die Erfindung bezieht sich auf eine Belüftungsvorrichtung für biologische Abwasserreinigungsanlagen, die einen dauerhaften, zeitweise abschaltbaren Lufteintrag erfordern, bestehend aus einer mit einer Luftzuführung und zumindest einer Zuströmöffnung versehenen Tragplatte, welche auf ihrer Oberseite von einer elastischen Membran abgedeckt ist, die an ihren Seiten dichtend mit der Tragplatte verbunden ist und eine Vielzahl feiner Durchtrittsöffnungen aufweist. Eine solche Belüftungsvorrichtung ist in der DE-OS 34 41 731 beschrieben.

Bei der bekannten Vorrichtung ist die Membran an ihren vier Seiten dichtend mit der Tragplatte verbunden. Die von der Luftzuführung über die Zuströmöffnung in den Raum zwischen der Membran und der Oberseite der Tragplatte einströmende Luft hebt die Membran ähnlich wie ein Luftkissen etwas von der Tragplatte ab und strömt dann aus den Durchtrittsöffnungen nach oben. Da die Durchtrittsöffnungen einen sehr geringen Querschnitt aufweisen, vermag die Membran die Zuströmöffnung wasserdicht abzusperren, so daß auch bei unterbrochener Druckluftzufuhr kein Wasser in die Luftzuführung strömen kann.

Plattenförmige Tragkörper haben gegenüber ebenfalls bekannten und gebräuchlichen röhrenförmigen Tragkörpern den Vorteil, daß sich ein gleichmäßigerer Luftaustritt erzielen läßt. Bei allen bekannten Membranbelüftern kommt es jedoch zu Schwierigkeiten, wenn diese mit einem zu hohen Luftdruck beaufschlagt werden. Das tritt immer dann ein, wenn aus wartungs-, betriebs- oder verfahrenstechnischen Gründen die Luftzufuhr zu mehreren Belüftungsvorrichtungen unterbrochen wird, ohne daß die Leistung der Luftdruckerzeugungsaggregate zuvor gedrosselt wurde, so daß die geförderte Luftmenge durch zahlenmäßig weniger Belüftungsvorrichtungen gepreßt werden muß. Da die Membranränder der herkömmlichen Belüftungsvorrichtungen gas- und wasserdicht mit dem Tragkörper verbunden sind, führt der mit einer erhöhten Luftbeaufschlagung verbundene Druckanstieg in dem geschlossenen Raum zwischen der Membran und dem Tragkörper zu einer Überdehnung der Membran oder im Extremfall zu einem Platzen der Membran. Eine derartige Überbeanspruchung hat zur Folge, daß nach Wiederherstellung des Normalbetriebs keine gleichen Druckwiderstände an den Belüftungsvorrichtungen mehr gegeben sind und die erforderliche Sauerstoffversorgung bzw. Bewegung des Abwassers in Teilen des Belüftungsbeckens unterbleibt. Um die Gleichförmigkeit der Abwasserbelüftung wieder zu erlangen, müssen die Belüftungsvorrichtungen aus dem Becken herausgenommen und die beschädigten Membranen ausgetauscht werden. In solchen Anlagen, wo die Belüftungsvorrichtungen fest am Boden installiert sind, ist das Becken für die Reparaturarbeiten zu entleeren, womit ein längerfristiger Ausfall der biologischen Abwasserreinigung verbunden ist.

Ein weiterer Nachteil der Belüftungsvorrichtung nach der DE-OS 34 41 731 liegt darin, daß die Membran unter dem anstehenden Druck ungleich hoch von dem Tragkörper abhebt. Da sie rundum an den Rändern befestigt ist, wird sie beim Arbeiten der Belüftungsvorrichtung immer in der Mitte am weitesten von der Tragplatte entfernt sein. Das ungleiche Auswölben hat zur Folge, daß an den höher ausgewölbten Stellen mehr Luft austritt und deshalb eine gleichmäßige Blasenverteilung über die gesamte Membranfläche nicht zu erreichen ist. Die Bereiche stärkerer Auswölbung unterliegen nach einiger Zeit einer nicht reversiblen Materialdehnung, die den Effekt der ungleichmäßigen Blasenverteilung sowie der Vergrößerung des Blasendurchmessers verstärken. Zur Erhaltung der erforderlichen Belüftungskapazität muß deshalb die Membran unerwünscht früh ausgetauscht werden.

Der Erfindung liegt die Aufgabe zugrunde, eine Belüftungsvorrichtung der eingangs genannten Art so auszubilden, daß es auch bei einer übermäßigen Luftbeaufschlagung nicht zu einer Beschädigung oder Zerstörung der Membran kommen kann, und die über einen möglichst großen Zeitraum hinweg einen möglichst gleichmäßigen Luftaustritt ermöglicht.

Diese Aufgabe wird erfindungsgemäß dadurch gelöst, daß die Tragplatte an zwei gegenüberliegenden Seiten nach unten gerichtete Umlenkteile aufweist, daß die Membran ein endloses, über die Tragplatte und den Umlenkteilen mit geringer Vorspannung führendes Band ist und daß die Membran nur an den nicht die Umlenkteile aufweisenden Kopfseiten der Tragplatte mit der Tragplatte gas- und wasserdicht verbunden ist.

Dadurch, daß gemäß der Erfindung die Membran an den Umlenkteilen lediglich aufgrund ihrer Vorspannung anliegt, kann bei einem unzulässig hohen Luftdruck Luft zwischen der Membran und der Außenseite der jeweiligen Umlenkteile zur Unterseite der Tragplatte gelangen und von dort abströmen, da die Membran an der Unterseite der Tragplatte entweder frei verläuft oder aber bei einem nicht freien Verlauf zu den Kopfseiten hin nicht abgedichtet ist. Deshalb führt ein zu hoher Luftdruck nicht zu einer Überdehnung oder gar Zerstörung der Membran. Da die Membran unter geringer Zuspannung steht, beult sie gleichmäßiger aus als eine lediglich auf eine Tragplatte aufgelegte und dann an ihren Rändern befestigte Membran, so daß es zu einem gleichmäßigeren Luftaustritt kommt.

Ein weiterer Vorteil der erfindungsgemäßen Belüftungsvorrichtung liegt darin, daß man die als endloses Band ausgeführte Membran nach längerer Betriebszeit so verschieben kann, daß ihr zunächst nach unten weisender Bereich auf die Oberseite der Tragplatte gelangt. Das ist rascher durchzuführen als das Austauschen der Membran bei der bekannten Belüftungsvorrichtung, weil hierzu nur an den beiden Kopfseiten die Abdichtmittel gelöst werden müssen.

Kostruktiv besonders einfach ist die Belüftungsvorrichtung gestaltet, wenn die Tragplatte mittig auf einem die Luftzuführung bildenden Rohr befestigt ist und die Umlenkteile durch jeweils einen Bogen von 180 Grad bildenden Abrundungen an zwei gegenüberliegenden Enden der Tragplatte gebildet sind.

Die Membran liegt über ihre gesamte Fläche mit geringer Vorspannung auf der Oberseite der Tragplatte auf, wenn gemäß einer anderen Ausgestaltung der Erfindung die Tragplatte nach oben hin leicht konvex ausgebildet ist.

Eine andere, besonders kostengünstig herstellbare Ausführungsform der Erfindung liegt darin, daß die Tragplatte aus einem nach unten hin offenen Rohrprofil gebildet ist.

Für besonders großflächige Belüftungsvorrichtungen ist es vorteilhaft, wenn das der Luftzuführung dienende Rohr von beiden Enden her mit Luft beaufschlagbar ist und mehrere, nach oben weisende Öffnungen hat, welche mit den Zuströmöffnungen der Tragplatte fluchten.

Zur weiteren Reduzierung der Herstellungskosten trägt es bei, wenn als Luftzuführung ein an der Unterseite der Tragplatte angeschweißtes u-förmiges oder v-förmiges Profil dient.

Abgebogene Ränder der Tragplatte zur Bildung der Umlenkteile sind unnötig, wenn gemäß einer ganz besonders vorteilhaften Ausgestaltung der Erfindung die Luftzuführung durch zugleich die Umlenkungen der Tragplatte bildende, an zwei gegenüberliegenden Rändern der Tragplatte parallel zueinander verlaufende Rohre gebildet ist.

Die Luftumlenkteile brauchen nicht notwendigerweise durch Rohre oder Halbkreise gebildet zu sein. Möglich ist es auch, daß die Umlenkteile jeweils durch zwei Viertelkreise mit einem dazwischenliegenden geraden Teilstück gebildet sind

Eine andere, vorteilhafte Ausgestaltung der Erfindung besteht darin, daß der unterhalb der Tragplatte verlaufende Teil der endlosen Membran durch eine Spannvorrichtung auf eine geringe Zugspannung gehalten ist. Hierdurch kann man die Membran so groß bemessen, daß sie sich locker auf die Tragplatte aufschieben läßt. Die erforderliche geringe Vorspannung kann dann von der Spannvorrichtung erzeugt werden. Deshalb kann die Membran auch aus einem nicht elastischen Werkstoff bestehen. Die Spannvorrichtung erleichtert auch das Verschieben der Membran, wenn nach längerer Betriebsdauer die unbenutzte, nach unten weisende Seite der Membran nach oben geschoben werden soll, indem hierzu die Spannvorrichtung gelöst wird, so daß die Membran nicht mehr unter Vorspannung steht.

Statt von unterhalb der Tragplatte kann man die Luft auch auf einfache Weise von den Seiten her zwischen die Oberseite der Tragplatte und der Membran einführen, wenn die Luftzuführung durch von den Kopfseiten her auf die Tragplatte aufgeschobene, unter die Membran greifende Klemmpaßstücke erfolgt, auf denen die Membran dichtend befestigt ist.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. In ihr zeigen
- Fig. 1: eine Seitenansicht der Belüftungsvorrichtung nach der Erfindung,
- Fig. 2: eine teilweise Draufsicht auf die Belüftungsvorrichtung nach Figur 1,
- Fig. 3: eine Seitenansicht einer zweiten Ausführungsform der Belüftungsvorrichtung,
- Fig. 4: eine Seitenansicht einer dritten Ausführungsform der Belüftungsvorrichtung,
- Fig. 5: eine Seitenansicht einer vierten Ausführungsform der Belüftungsvorrichtung,
- Fig. 6: einen senkrechten Schnitt durch einen Randbereich der Belüftungsvorrichtung,
- Fig. 7: einen senkrechten Schnitt durch einen gegenüber Figur 6 geänderten Randbereich der Belüftungsvorrichtung,

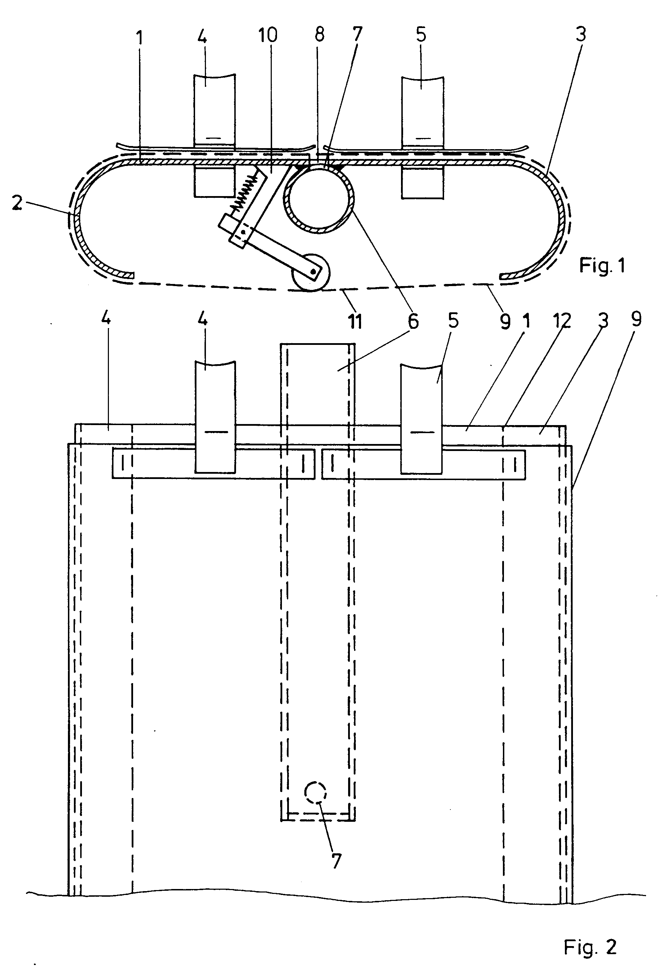

Die in Figur 1 gezeigte Belüftungsvorrichtung hat eine flache Tragplatte 1, von der zwei gegenüberliegende Enden nach unten hin um 180 Grad abgebogen sind, so daß dort jeweils ein Umlenkteil 2, 3 entsteht.

Unterhalb der Tragplatte 1 befindet sich als Luftzuführung ein symmetrisch zur Tragplatte 1 und den Umlenkteilen 2, 3 angeordnetes Rohr 6, welches auf seiner Oberseite eine öffnung 7 hat, die mit einer Zuströmöffnung 8 in der Tragplatte 1 fluchtet. Eine als endloses Band ausgebildete Membran 9 mit feinen Durchtrittsöffnungen 11 verläuft über die Oberseite der Tragplatte 1 und über die beiden Umlenkteile 2, 3. Eine Spannvorrichtung 10, welche auf den unteren, freien Bereich der Membran 9 drückt, sorgt dafür, daß die Membran 9 unter einer geringen Vorspannung steht. Mit Dichtungsklammern 4, 5 wird kopfseitig die Membran 9 gas- und wasserdicht auf die Oberseite der Tragplatte 1 gepreßt.

Die Draufsicht gemäß Figur 2 verdeutlicht zusätzlich die Gestaltung der Belüftungsvorrichtung. Dargestellt ist das der Luftzufuhr dienende Rohr 6 mit seiner öffnung 7, aus der die Luft über die in Figur 1 gezeigte Zuströmöffnung 8 zwischen die Membran 9 und die Tragplatte 1 gelangt. Die Figur 2 zeigt weiterhin die beiden Umlenkteile 3, 4 und eine Kopfseite 12 der Tragplatte 1. An dieser Kopfseite 12 und der entsprechenden, nicht dargestellten, gegenüberliegenden Kopfseite ist die Membran 9 durch Dichtmittel gas- und wasserdicht mit der Tragplatte 1 verbunden. Bei diesem Ausführungsbeispiel handelt es sich bei den Dichtmitteln um die Dichtungsklammern 4, 5, die auch in Figur 1 dargestellt wurden.

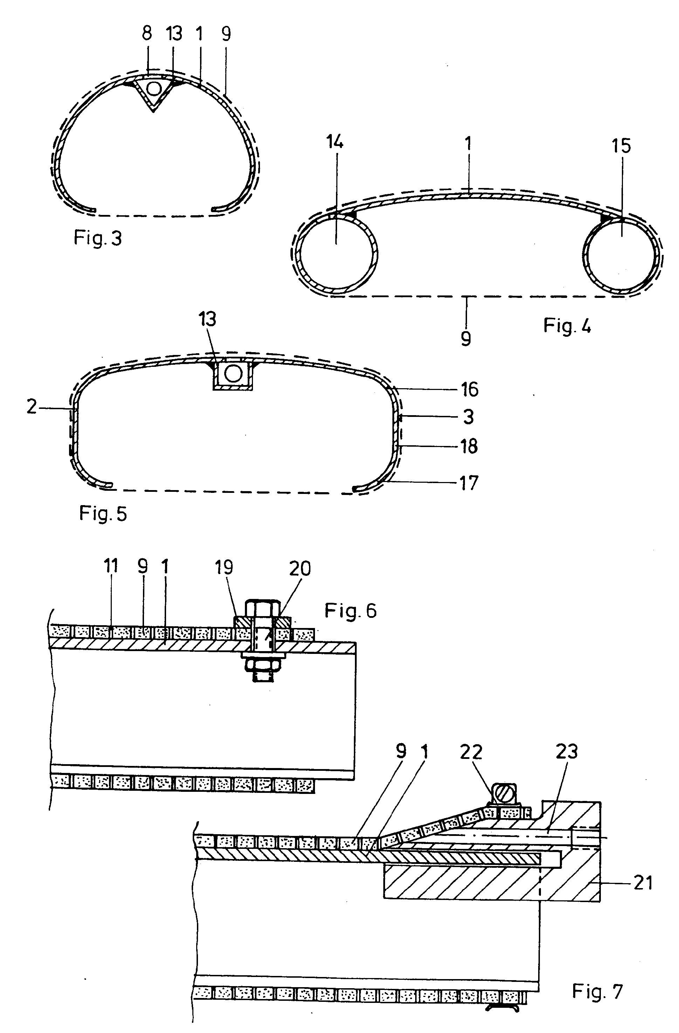

Bei der Ausführungsform nach Figur 3 ist als Tragplatte 1 ein nach unten hin offenes, ovales Rohrprofil vorgesehen, über das wiederum die Membran 9 gespannt ist. An beiden nicht zu sehenden Kopfseiten ist über die Membran 9 ein nicht gezeigtes Spannband gespannt, so daß sie dort mit der Tragplatte 1 dichtend verbunden ist. Unterhalb der Tragplatte 1 ist ein v-förmiges Profil 13 geschweißt, welches der Luftzuführung dient. Die zugeführte Luft gelangt durch die Zuführöffnung 8 zwischen die Membran und die Außenseite der Tragplatte 1. Steigt der Luftdruck unzulässig an, dann kann die Membran 9 auch in den unteren Bereichen von der Tragplatte 1 abheben, so daß die Luft in das Innere des die Tragplatte 1 bildenden Rohrprofils und von dort durch den unteren, freien Bereich nach außen abströmen kann.

Die Figur 4 zeigt eine Ausführungsform, bei der als Umlenkung zwei Rohre 14, 15 vorgesehen sind, die zugleich der Luftzufuhr dienen. Zwischen den Rohren 14, 15 ist an der Oberseite der Rohre 14, 15 die bei diesem Ausführungsbeispiel nach oben hin leicht konvex verlaufende Tragplatte 1 geschweißt. Die Membran 9 umspannt wiederum die Gesamtanordnung.

Bei dem Ausführungsbeispiel gemäß Figur 5 sind die Umlenkteile 2, 3 jeweils durch zwei Viertelkreisstücke 16, 17 und einem dazwischenliegenden geraden Teilstück 18 gebildet.

Die Figur 6 zeigt beispielsweise, daß die Membran 9 an ihren Kopfseiten durch Druckstücke 19 dichtend auf der Tragplatte 1 gehalten sein kann. Durch diese Druckstücke 19 und die Tragplatte 1 führen Schrauben 20 hindurch, so daß diese die erforderliche Anpreßkraft zwecks Erzielen einer guten Dichtheit zu erzeugen vermögen.

Bei der Ausführungsform gemäß Figur 7 sind von der Seite her Klemmpaßstücke 21 auf die Tragplatte 1 unter die Membran 9 geschoben. Die Membran 9 ist durch ein Spannband 22 dichtend auf dem Klemmpaßstück 21 gehalten. Das Klemmpaßstück 21 hat eine horizontale durchgehende Bohrung 23, über die die Zufuhr der Luft zwischen der Membran 9 und der Tragplatte 1 erfolgt. Bei dieser Ausführungsform ist somit kein Rohr unterhalb der Tragplatte zur Luftzuführung erforderlich.

### Auflistung der verwendeten Bezugszeichen

- 1: Tragplatte
- 2: Umlenkteil
- 3: Umlenkteil
- 4: Dichtungsklammer
- 5: Dichtungsklammer
- 6: Rohr
- 7: öffnung
- 8: Zuströmöffnung
- 9: Membran
- 10: Spannvorrichtung
- 11: Durchtrittsöffnung
- 12: Kopfseite
- 13: Profil
- 14: Rohr
- 15: Rohr
- 16: Viertelkreisstück
- 17: Viertelkreisstück
- 18: Teilstück
- 19: Druckstück
- 20: Schraube
- 21: Klemmpaßstück
- 22: Spannband
- 23: Bohrung

## Patentansprüche

1. Belüftungsvorrichtung für biologische Abwasserreinigungsanlagen, die einen dauerhaften, zeitweilig abschaltbaren Lufteintrag erfordern, bestehend aus einer mit einer Luftzuführung und zumindest einer Zuströmöffnung versehenen Tragplatte, welche auf ihrer Oberseite von einer elastischen Membran abgedeckt ist, die an ihren Seiten dichtend mit der Tragplatte verbunden ist und eine Vielzahl feiner Durchtrittsöffnungen aufweist, dadurch gekennzeichnet, daß die Tragplatte (1) an zwei gegenüberliegenden Seiten nach unten gerichtete Umlenkteile (2, 3) aufweist, daß die Membran (9) ein endloses, über die Tragplatte (1) und die Umlenkteile (2, 3) mit geringer Vorspannung führendes Band ist und daß die Membran (9) nur an den nicht die Umlenkteile (2, 3) aufweisenden Kopfseiten (12) der Tragplatte (1) mit der Tragplatte (1) gas- und wasserdicht verbunden ist.

2. Belüftungsvorrichtung nach Anspruch 1, dadurch gekennzeichnet, daß die Tragplatte (1) mittig auf einem die Luftzuführung bildenden Rohr (6) befestigt ist und die Umlenkteile (2, 3) durch jeweils einen Bogen von 180 Grad bildende Abrundungen an zwei gegenüberliegenden Enden der Tragplatte (1) gebildet sind.

3. Belüftungsvorrichtung nach den Ansprüchen 1 oder 2, dadurch gekennzeichnet, daß die Tragplatte (1) nach oben hin leicht konvex ausgebildet ist.

4. Belüftungsvorrichtung nach zumindest einem der vorangehenden Ansprüche, dadurch gekennzeichnet, daß die Tragplatte (1) aus einem nach unten hin offenen Rohrprofil gebildet ist.

5. Belüftungsvorrichtung nach zumindest einem der vorangehenden Ansprüche, dadurch gekennzeichnet, daß das der Luftzuführung dienende Rohr (6) von beiden Enden her mit Luft beaufschlagbar ist und mehrere nach oben weisende öffnungen (7) hat, welche mit den Zuströmöffnungen (8) der Tragplatte (1) fluchten.

6. Belüftungsvorrichtung nach zumindest einem der vorangehenden Ansprüche, dadurch gekennzeichnet, daß als Luftzuführung ein an der Unterseite der Tragplatte (1) angeschweißtes u-förmiges oder v-förmiges Profil (13) dient.

7. Belüftungsvorrichtung nach zumindest einem der vorangehenden Ansprüche, dadurch gekennzeichnet, daß die Luftzuführung durch zugleich die Umlenkungen der Tragplatte (1) bildende, an zwei gegenüberliegenden Rändern der Tragplatte (1) parallel zueinander verlaufende Rohre (14, 15) gebildet ist.

8. Belüftungsvorrichtung nach zumindest einem der vorangehenden Ansprüche, dadurch gekennzeichnet, daß die Umlenkungen jeweils durch zwei Viertelkreisstücke (16, 17) mit einem dazwischenliegenden geraden Teilstück (18) gebildet sind

9. Belüftungsvorrichtung nach zumindest einem der vorangehenden Ansprüche, dadurch gekennzeichnet, daß der unterhalb der Tragplatte (1) verlaufende Teil der endlosen Membran (9) durch eine Spannvorrichtung (10) auf eine geringe Zugspannung gehalten ist.

10. Belüftungsvorrichtung nach zumindest einem der vorangehenden Ansprüche, dadurch gekennzeichnet, daß die Luftzuführung durch von den Kopfseiten (12) her auf die Tragplatte (1) aufgeschobene, unter die Membran (9) greifende Klemmpaßstücke (21) erfolgt, auf denen die Membran (9) dichtend befestigt ist.

## Claims

1. Aerating device for biological sewage treatment plants which require a permanent introduction of air which may be switched off temporarily, consisting of a carrying plate which is provided with an air supply means and at least one inlet opening and is covered, on its upper side, by an elastic membrane, the elastic membrane being connected at its sides to the carrying plate in a sealing manner and having a plurality of fine through-openings, characterised in that the carrying plate (1) has downwardly directed deflecting members (2, 3) on two opposite sides, in that the membrane (9) is an endless belt leading over the carrying plate (1) and the deflecting members (2, 3) with slight initial tension and in that the membrane (9) is connected to the carrying plate (1) in a gas and water-tight manner only at the top sides (12) of the carrying plate (1) not having deflecting members (2, 3).

2. Aerating device according to claim 1, characterised in that the carrying plate (1) is fastened centrally on a tube (6) forming the air supply means and the deflecting members (2, 3) are formed by rounded regions, each forming an arc of 180^{o}, at two opposite ends of the carrying plate (1).

3. Aerating device according to claims 1 or 2, characterised in that the carrying plate (1) is slightly convex in design at the top.

4. Aerating device according to at least one of the preceding claims, characterised in that the carrying plate (1) is formed from a tube profile which is open at the bottom.

5. Aerating device according to at least one of the preceding claims, characterised in that the tube (6) serving as an air supply means may be charged with air from both ends and has a plurality of upwardly directed openings (7) aligned with the inlet openings (8) of the carrying plate (1).

6. Aerating device according to at least one of the preceding claims, characterised in that a U-shaped or V-shaped profile (13) welded on the underside of the carrying plate (1) serves as an air supply means.

7. Aerating device according to at least one of the preceding claims, characterised in that the air supply means is formed by tubes (14, 15) which simultaneously form the deflections of the carrying plate (1) and extend parallel to one another on two opposite edges of the carrying plate (1).

8. Aerating device according to at least one of the preceding claims, characterised in that the deflections are each formed by two quarter circle pieces (16, 17) with an interposed straight piece (18).

9. Aerating device according to at least one of the preceding claims, characterised in that the part of the endless membrane (9) extending below the carrying plate (1) is held at low tension by a fixing device (10).

10. Aerating device according to at least one of the preceding claims, characterised in that the air is supplied through fitting pieces (21) which are pushed onto the carrying plate (1) from the top sides (12), grip beneath the membrane (9) and on which the membrane (9) is fastened in a sealing manner.

## Revendications

1. Dispositif d'aération pour des installations d'épuration biologique d'eaux usées qui requièrent une alimentation permanente en air pouvant être arrêtée temporairement, constitué d'une plaque de support munie d'une amenée d'air et d'au moins une ouverture d'afflux, plaque qui est recouverte sur sa face supérieure d'une membrane élastique qui est assemblée de manière étanche à ses côtés à la plaque de support et comporte une multiplicité de fines ouvertures de passage, caractérisé en ce que la plaque de support (1) comporte sur deux côtés opposés des éléments de changement de direction (2, 3) dirigés vers le bas, la membrane (9) est une bande sans fin passant sur la plaque de support (1) et les éléments de changement de direction (2, 3) et la membrane (9) n'est assemblée à la plaque de support (1) de manière étanche au gaz et à l'eau qu'aux côtés frontaux (12) de la plaque de support non munis des éléments de changement de direction (2, 3).

2. Dispositif d'aération selon la revendication 1 caractérisé en ce que la plaque de support (1) est fixée en son milieu sur un tube (6) constituant l'amenée d'air et les éléments de changement de direction (2, 3) sont formés chacun par des éléments arrondis formant un arc de 180° aux deux extrémités opposées de la plaque de support (1).

3. Dispositif d'aération selon les revendications 1 ou 2 caractérisé en ce que la plaque de support (1) est agencée avec une forme légèrement convexe vers le haut.

4. Dispositif d'aération selon l'une au moins des revendications précédentes caractérisé en ce que la plaque de support (1) est constituée d'un profilé tubulaire ouvert vers le bas.

5. Dispositif d'aération selon l'une au moins des revendications précédentes caractérisé en ce que le tube (6) servant à l'amenée d'air peut être alimenté en air à partir des deux côtés et est muni de plusieurs ouvertures (7) tournées vers le haut qui sont alignées sur les ouvertures d'afflux (8) de la plaque de support (1).

6. Dispositif d'aération selon l'une au moins des revendications précédentes caractérisé en ce qu'un profilé en u ou en v (13) soudé sur la face inférieure de la plaque de support (1) sert comme amenée d'air.

7. Dispositif d'aération selon l'une au moins des revendications précédentes caractérisé en ce que l'amenée d'air est formée par deux tubes (14, 15) disposés parallèlement l'un à l'autre à deux bords opposés de la plaque de support (1) constituant simultanément les éléments de changement de direction de la plaque de support (1).

8. Dispositif d'aération selon l'une au moins des revendications précédentes caractérisé en ce que les éléments de changement de direction sont chacun formés par des parties correspondant à un quart de circonférence (16, 17) avec une partie rectiligne (18) disposée intermédiairement.

9. Dispositif d'aération selon l'une au moins des revendications précédentes caractérisé en ce que la partie de la membrane sans fin (9) disposée en dessous de la plaque de support (1) est maintenue sous une faible tension par un dispositif tendeur (10).

10. Dispositif d'aération selon l'une au moins des revendications précédentes caractérisé en ce que l'amenée d'air a lieu par des pièces ajustées à serrage (21) placées à partir des faces frontales (12) sur la plaque de support (1) et s'engageant sous la membrane (9), cette membrane (9) étant fixée de manière étanche sur ces pièces.
